# FASCICULE DE BREVET EUROPEEN

(11) **EP 2 834 035 B1**
(45) Date de publication et mention de la délivrance du brevet: **18.07.2018**
(21) Numéro de dépôt: 13708204.6
(22) Date de dépôt: 13.02.2013
(51) Int. Cl.: B23K 26/14, B23K 26/08

(54) **BUSE LASER AVEC ÉLÉMENT MOBILE À PROFIL EXTERNE AMÉLIORÉ**
LASERDÜSE MIT EINEM MOBILEN ELEMENT MIT VERBESSERTEM ÄUSSEREM PROFIL
LASER NOZZLE WITH MOBILE ELEMENT OF IMPROVED EXTERNAL PROFILE

(30) Priorité: 04.04.2012 FR 1253089
(43) Date de publication de la demande: 11.02.2015
(60) Demande divisionnaire: 17197254.0
(73) Titulaire: L'Air Liquide Société Anonyme pour l'Etude et l'Exploitation des Procédés Georges Claude, 75007 Paris (FR)
(72) Inventeur: JOUANNEAU, Thomas, F-38000 Grenoble (FR); LEFEBVRE, Philippe, F-78250 Meulan (FR)
(74) Mandataire: Debecker, Isabelle Virginie
(86) Numéro de dépôt international: PCT/FR2013/050291
(87) Numéro de publication internationale: WO 2013/150195

(56) Documents cités:
- JP-A- 7 251 287
- JP-A- 63 040 695
- US-A- 4 031 351

## Description

L'invention concerne une buse laser utilisable en coupage par faisceau laser avec élément mobile interne comprenant une jupe permettant de concentrer le gaz de coupe dans la saignée de coupe et offrant, en outre, une mise en oeuvre au plan industriel ainsi qu'une durée de vie améliorées.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695, sur lequel le préambule de la revendication 1 se base, et US-A-4,031,351.

Or, aucune de ces solutions n'est vraiment idéale car souvent d'architecture complexe à mettre en oeuvre, d'encombrement supérieur à celui d'une buse classique, et/ou présentant une efficacité limitée.

Notamment, le document US-A-4,031,351 divulgue une buse de coupage laser comprenant un élément mobile dont l'extrémité est plaquée par un ressort contre la surface de la pièce à découper pour favoriser l'injection du gaz de coupe dans la saignée.

L'inconvénient majeur de cette solution réside dans le fait que la force exercée par le ressort en direction de la tôle, cumulée à la pression du gaz de coupe, conduit l'élément mobile à exercer un effort important sur la tôle à couper. Il s'ensuit un risque de déformation, de rayure, voire d'entraînement de la tôle, laquelle est en général simplement posée sur la table de la machine industrielle de découpe.

Pour y remédier, il a été proposé dans la demande de brevet français n° 1154224, déposée le 16 mai 2011, d'agencer un élément mobile dans le corps d'une buse laser. Cet élément mobile est apte à se déplacer axialement dans ledit corps, sous l'effet d'une pression gazeuse, et ce en direction de la surface de la tôle à découper. Il s'ensuit un rapprochement de l'élément mobile de la surface supérieure de la tôle à couper qui vient en contact de la tôle, formant ainsi une jupe, dont le profil externe est de forme cylindrique, par laquelle le gaz de coupe est canalisé et concentré au niveau de la saignée, ce qui force le gaz à entrer dans la saignée et améliore son efficacité.

En outre, cette buse comprend un élément élastique exerçant une force de rappel élastique sur l'élément mobile dans un sens tendant à l'éloigner de la tôle. Ainsi, lorsque le gaz est coupé, l'élément mobile peut être rappelé dans sa position de repos et donc la jupe rentrer à l'intérieur du corps de buse.

Toutefois, cette solution présente quelques inconvénients, notamment au plan industriel.

En effet, différents types d'obstacles peuvent se trouver à la surface de la tôle à découper et entraver le déplacement de l'élément mobile dans sa position de travail, c'est-à-dire au contact de la tôle. Il peut s'agir par exemple de surépaisseurs de métal fondu résultant de projections se produisant lors des phases de perçage et d'amorçage de découpe ou de pièces déjà découpées restées coincées dans la tôle et positionnées en biais par rapport à la surface de la tôle, c'est-à-dire dont une partie se situe au-dessus du niveau de la surface supérieure de la tôle. Les découpes débutées à partir d'un bord de tôle peuvent également générer des marches ou dénivelés, c'est-à-dire des différences de niveaux entre différentes parties de la tôle, du fait d'une déformation ou d'un abaissement de certaines parties de la tôle se produisant en cours de découpe.

Il s'ensuit des risques d'à-coups et de chocs au niveau de l'extrémité de la jupe située en regard de la tôle lorsque la paroi périphérique de la jupe se retrouve face à des obstacles éventuellement présents sur la tôle. Le déplacement de la jupe peut être ralenti, voire freiné brutalement ou même arrêté.

Les chocs produits au niveau de l'extrémité de la jupe, si détectés par la machine de découpe, peuvent provoquer des arrêts d'urgence intempestifs de la machine. Ces chocs peuvent aussi endommager et altérer l'efficacité de la jupe, jusqu'à entraîner sa rupture ou détérioration complète. Il est alors nécessaire de remplacer l'élément mobile de la buse, ce qui engendre une augmentation des coûts de production et une baisse de productivité de la machine de découpe industrielle.

Ces problèmes sont d'autant plus importants dans le cadre de découpes dites « en imbrication », largement employées dans l'industrie du fait de l'économie de matière réalisée, pour lesquelles les pièces découpées dans une même tôle sont très rapprochées les unes des autres, certaines pièces pouvant même avoir des bords communs.

Il a été proposé dans le document JP-A-7251287 une buse laser comprenant un élément mobile et un ressort exerçant une force tendant à plaquer ledit élément sur la tôle. En outre, cette buse utilise la force exercée par le gaz de coupe s'échappant sous la surface dudit élément située en regard de la tôle à couper pour provoquer un faible éloignement de l'élément mobile par rapport à la tôle.

Mais cette solution est difficile à mettre en oeuvre car elle impose un contrôle précis des différentes forces mises en jeu pour ajuster et maintenir l'éloignement souhaité. En outre, cette éloignement réduit l'efficacité d'injection du gaz dans la saignée. Elle continue aussi de poser problème au cours des étapes du procédé dans lesquelles aucun gaz de coupe n'est délivré par la buse, ou bien seule une faible pression de gaz de coupe alimente la buse.

C'est notamment le cas lors du perçage de la tôle qui est opéré avec de faibles pressions de gaz, typiquement moins de 4 bar, ou lors des déplacements rapides de la buse au-dessus de la tôle, à une distance typique de 0,5 mm à quelques mm, qui sont opérés sans gaz de coupe ni faisceau, en particulier lorsque plusieurs pièces en imbrication sont découpées sur une même tôle. Pour gagner en rapidité et en cadence de production, ces opérations sont en général réalisées en évitant de relever le dispositif qui supporte la buse par rapport à sa position en configuration de coupe.

Dans ces situations, la solution de JP-A-7251287 ne permet pas un éloignement de l'élément mobile par rapport à la tôle et on se retrouve confronté aux problèmes mentionnés ci-dessus, l'élément mobile faisant en permanence saillie à l'extérieur du corps de buse. Ceci pose également problème dans les phases de perçage, une trop grande proximité de la buse avec la tôle étant à proscrire du fait des projections importantes de métal fondu générées.

Le problème qui se pose est dès lors de proposer une buse de coupage par faisceau laser pour laquelle les problèmes susmentionnés sont grandement réduits, voire éliminés, en particulier une buse laser dont le déplacement sur la tôle découpée est nettement moins perturbé en cas d'obstacles se trouvant à la surface de ladite tôle et pour laquelle les chocs résultants de la rencontre de la buse avec lesdits obstacles sont grandement réduits par rapport aux solutions existantes.

En outre, la buse laser de la présente invention doit pouvoir être mise en oeuvre au plan industriel, présenter une robustesse et une durée de vie améliorées par rapport aux solutions existantes, et ne pas perturber le fonctionnement de la machine de découpe sur laquelle ladite buse est installée.

La solution de la présente invention est alors une buse laser comprenant :
- un corps de buse comprenant un logement axial et un premier orifice de sortie situé au niveau de la face avant du corps de buse,
- un élément mobile agencé dans le logement axial du corps de buse, comprenant une partie avant formant jupe et comprenant un deuxième orifice de sortie, ledit élément mobile étant apte à se déplacer en translation dans le logement axial en direction du premier orifice de sortie sous l'effet d'une pression gazeuse s'exerçant sur l'élément mobile jusqu'à ce que la partie avant formant jupe de l'élément mobile vienne faire saillie à l'extérieur du logement axial au travers du premier orifice de sortie, et
- un élément élastique agencé dans le logement axial, entre le corps de buse et l'élément mobile exerçant une force de rappel élastique sur l'élément mobile,
caractérisée en ce que la partie avant comprend une portion d'extrémité dont le diamètre externe diminue progressivement en direction du deuxième orifice de sortie.

Selon le cas, la buse de l'invention peut comprendre l'une ou plusieurs des caractéristiques techniques suivantes :
- la partie avant comprend en outre une portion cylindrique de diamètre externe sensiblement constant.
- la portion d'extrémité comprend au moins un chanfrein formant un angle (a) par rapport à la face avant du corps de buse.
- l'angle du chanfrein est compris entre 0,1 et 80°, de préférence entre 10 et 45°.
- le profil externe de la portion d'extrémité est de forme tronconique.
- le profil externe de la portion d'extrémité comprend au moins une portion de forme curviligne.
- le profil externe de la portion d'extrémité comprend au moins une portion de forme convexe.
- la au moins une portion de forme convexe a un rayon de courbure compris entre 0,1 et 2 mm.
- la portion cylindrique a un diamètre externe compris entre 3 et 8 mm.
- la portion d'extrémité a un diamètre externe compris entre 2.5 et 7 mm au niveau du deuxième orifice de sortie.
- lorsque l'élément mobile se déplace en translation dans le logement axial en direction du premier orifice de sortie situé au niveau de la face avant du corps de buse, la partie avant formant jupe de l'élément mobile fait saillie à l'extérieur du logement axial au travers du premier orifice de sortie de la face avant du corps de buse.
- le fond du logement axial du corps de buse comprend un épaulement, et la paroi périphérique de l'élément mobile comprend une butée, l'élément élastique étant positionné entre l'épaulement et la butée.
- au moins un élément d'étanchéité est agencé entre le corps de buse et l'élément mobile, par exemple un ou plusieurs joints toriques.
- ledit au moins un élément d'étanchéité est agencé dans une gorge périphérique aménagée dans la paroi périphérique externe de l'élément mobile.
- l'élément mobile est apte à se déplacer entre plusieurs positions comprenant :
   - une position de repos dans laquelle la jupe de la partie avant est totalement ou quasi-totalement rentrée dans le logement axial du corps de buse, et
   - une position de travail dans laquelle la jupe de la partie avant fait totalement ou quasi-totalement saillie à l'extérieur du logement axial du corps de buse, au travers du premier orifice de sortie.
- le passage axial de l'élément mobile a un profil de forme conique, tronconique ou convergente/divergente.
- le corps de buse est en un matériau conducteur électriquement, en particulier cuivre, laiton ou analogue.
- l'élément mobile est formé en tout ou en partie d'un matériau isolant électriquement.
- de manière alternative, un élément mobile est en un matériau conducteur électriquement et résistant à la température/chaleur, en particulier cuivre, laiton ou analogue, ledit élément isolant comprenant au moins une interface isolante agencée entre la buse et la paroi de l'insert mobile. L'interface isolante est soit un manchon agencé dans le corps de buse, soit un revêtement isolant porté par le corps de buse ou l'élément mobile.

L'invention porte également sur une tête de focalisation laser comprenant au moins une optique de focalisation, par exemple une ou plusieurs lentilles ou miroirs, notamment une lentille de focalisation et une lentille de collimation, caractérisée en ce qu'elle comporte en outre une buse laser selon l'invention.

Par ailleurs, l'invention concerne aussi une installation laser comprenant un générateur laser, une tête de focalisation laser et un dispositif de convoyage de faisceau laser relié audit générateur laser et à ladite tête de focalisation laser, caractérisée en ce que la tête de focalisation laser est selon l'invention.

De préférence, le générateur ou source laser est de type CO₂, YAG, à fibres ou à disques, de préférence à fibres ou à disques, notamment une source laser à fibres d'ytterbium.

Selon encore un autre aspect, l'invention a également trait à un procédé de coupage par faisceau laser, dans lequel on met en oeuvre une buse selon l'invention, une tête de focalisation laser selon l'invention ou une installation selon l'invention.

L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2 est un schéma en coupe du corps d'une buse selon l'invention,
- la Figure 3 est un schéma en coupe d'une buse selon la demande de brevet français n°1154224,
- la Figure 4 est un schéma en coupe d'une buse selon un mode de réalisation de l'invention,
- la Figure 5 est un schéma en coupe du corps d'une buse selon un autre mode de réalisation de l'invention,
- les Figures 6A et 6B montrent la buse de l'invention avec l'élément mobile dans deux positions différentes, et
- la Figure 7 illustre le déplacement de l'élément mobile d'une buse selon l'invention au-dessus d'un dénivelé.

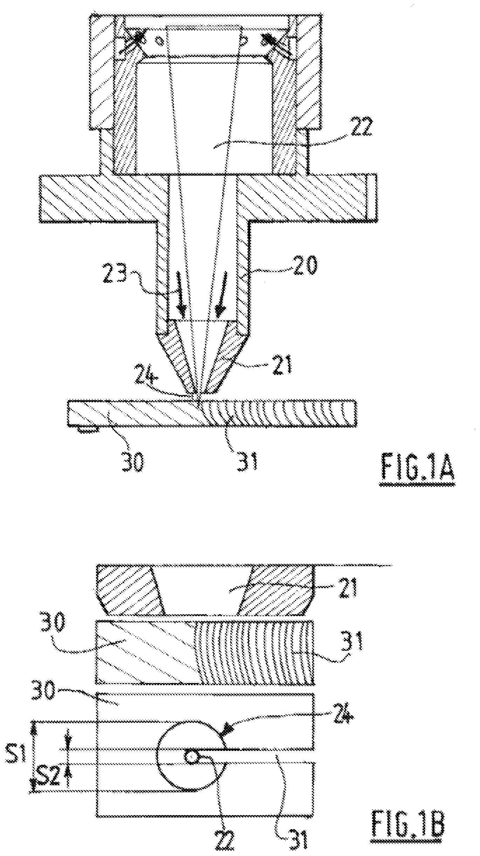

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, il a été proposé dans la demande de brevet français n°1154224 une buse laser apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée 31 et à y expulser efficacement le métal fondu, et ce, quelle que soit la puissance laser ainsi et la longueur d'onde du faisceau.

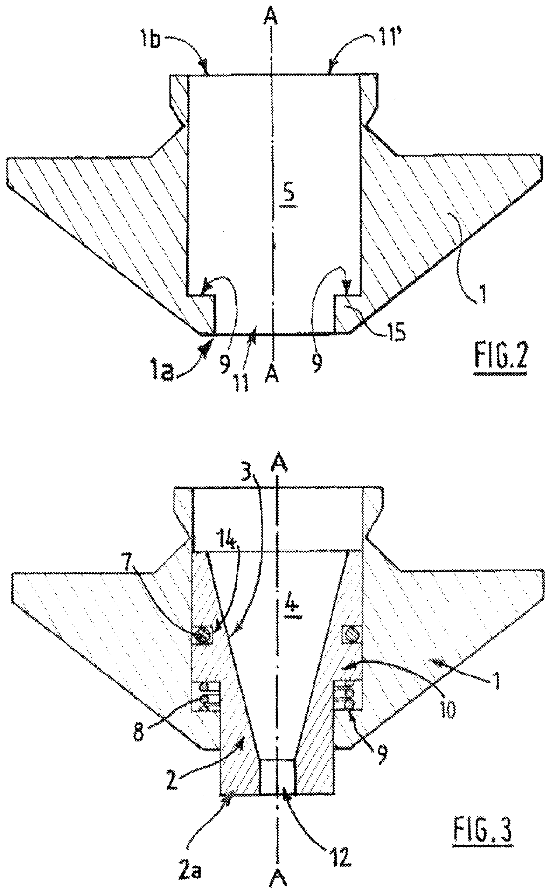

Selon le document FR n°1154224, la buse laser comprend au moins deux composants essentiels, à savoir un corps 1 de buse coopérant avec un élément mobile 2 agencé et façon mobile à l'intérieur du corps 1 de la buse, dont un mode de réalisation est illustré en Figures 2 et 3.

Plus précisément, comme visible en Figure 2, le corps 1 de buse qui est formé d'un matériau conducteur, par exemple du cuivre ou du laiton, est destiné à venir se fixer sur la tête de focalisation laser 20 de l'installation laser.

Avantageusement, le corps 1 de buse est une pièce de révolution et est traversé de part en part par un logement axial 5 d'axe AA qui s'étend depuis la face arrière 1b du corps 1 jusqu'à la face avant la dudit corps 1.

Le logement axial 5 débouche au niveau des deux faces avant la et arrière 1b du corps 1 de buse. La face arrière 1b porte donc un premier orifice d'entrée 11', alors que la face avant la porte un premier orifice de sortie 11 du corps de buse 1, les premiers orifices d'entrée 11' et de sortie 11 étant coaxiaux d'axe AA.

Ce logement axial 5 est en fait un évidement, par exemple de forme cylindrique comprenant un épaulement 9 interne se projetant radialement vers le centre du logement 5, ledit épaulement interne 9 étant formé par une restriction 15 de la section du logement axial 5 au niveau du premier orifice de sortie 11 située en face avant la du corps 1 de buse.

La buse le document FR n°1154224 comprend par ailleurs un élément mobile 2 venant s'insérer dans le logement 5 du corps 1 de buse, de préférence coaxialement au corps 1, comme visible en Figure 3. Cet élément mobile 2 est apte à et conçu pour se déplacer en translation selon l'axe AA à l'intérieur du logement 5 du corps 1 de buse.

Selon le document FR n°1154224, cet élément mobile 2 comprend une partie avant 2a formant une jupe 6 de forme cylindrique, c'est-à-dire tubulaire, agencée dans le logement axial 5 du corps de buse 1 et comprenant un passage axial 4 avec un deuxième orifice de sortie 12 débouchant au niveau de la partie avant 2 formant ladite jupe 6.

Pendant l'utilisation de la buse, le faisceau laser 22 et le gaz d'assistance 23 traversent le passage axial 4 de l'élément mobile 2 et ressortent par le deuxième orifice de sortie 12 débouchant au niveau de la partie avant 2a formant ladite jupe 6

L'élément mobile 2 est déplaçable axialement par rapport au corps 1 de la buse selon l'axe AA. En fait, l'élément mobile 2 se déplace sous l'effet de la pression du gaz d'assistance 23 qui vient s'exercer sur ledit élément mobile 2, ce qui tend à le pousser en direction de la pièce à couper 30.

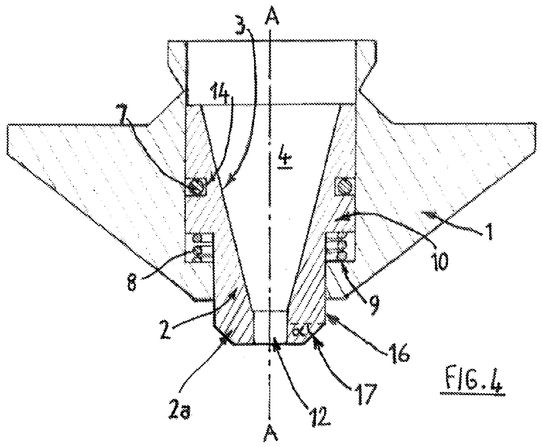

Le déplacement en translation selon l'axe AA de l'élément mobile 2 va provoquer le rapprochement de la jupe 6 de la surface supérieure 30 de la tôle à couper, qui vont venir en contact l'une de l'autre, comme illustré en Figure 4A.

Ainsi, le gaz va être canalisé par la jupe 6 et se trouver concentré au niveau de la tâche laser et donc de la saignée, ce qui va grandement améliorer son efficacité et l'expulsion du métal se fera mieux.

Un élément élastique 8, tel un ressort, est agencé dans le logement axial 5, entre le corps de buse 1 et l'élément mobile 2 de manière à exercer une force de rappel élastique sur l'élément mobile 2 dans un sens tendant à l'éloigner de la pièce à couper. Ainsi, en fin de coupe, lorsque le gaz est coupé et que la pression gazeuse cesse de s'exercer sur l'élément mobile 2, celui-ci peut être rappelé dans sa position de repos et donc la jupe 6 rentrer à l'intérieur du logement 5.

L'élément élastique 8 permet ainsi de limiter le phénomène d'usure de la jupe 6 lors des phases de perçage de la tôle qui précèdent généralement les phases de découpe. En effet le perçage est le plus souvent opéré avec de faibles pressions de gaz, typiquement moins de 4 bar. L'élément élastique exerce alors une force de rappel suffisante pour que la jupe 6 remonte totalement ou quasi-totalement dans le logement 5 et soit ainsi protégée des projections de métal fondu générées par le perçage.

En outre, l'élément élastique 8 facilite les déplacements rapides de la tête de découpe à faible distance au-dessus de la tôle, sans gaz de coupe ni faisceau, puisque la pression gazeuse cesse alors de s'exercer sur l'élément mobile et la jupe 6 rentre à l'intérieur du logement 5. Seule la jupe 6 remonte et il n'est pas nécessaire de relever la tête de focalisation supportant la buse.

Selon le document FR n°1154224, l'élément mobile 2 comprend une partie avant 2a formant une jupe 6 de forme cylindrique, c'est-à-dire de diamètre externe constant le long de l'axe AA.

Or, comme déjà expliqué, cette forme cylindrique pose problème lorsque des obstacles, des irrégularités ou surépaisseurs, ou des dénivelés, plus hauts que le niveau de la surface supérieure de la tôle à couper, sont présents sur la surface de la tôle à découper, par exemple à la suite de projections de métal fondu ou de pièces découpées restées bloquées dans le squelette de la tôle.

En effet, dans cette configuration, la paroi périphérique externe de la partie avant 2a constitue une paroi perpendiculaire à la surface de la tôle à couper, i. e. verticale, dont la résistance face à un obstacle est relativement importante, en particulier aux grandes vitesses de découpe rencontrées en découpe laser, typiquement entre 0.1 et 50 m/min, selon l'épaisseur de la tôle à couper. Il s'ensuit une mauvaise absorption des chocs par la jupe 6 et un déplacement de ladite jupe facilement entravé, ralenti, voire freiné brutalement ou même arrêté En d'autres termes, le profil externe de forme cylindrique de la jupe favorise les chocs frontaux entre la surface externe de ladite jupe et les obstacles éventuellement présents sur la tôle.

En outre, la présence d'une arête vive à l'extrémité de la partie avant 2a, comme on le voit sur la Figure 3, est plus propice à l'initiation de fêlure ou de rupture de la jupe 6 en cas de choc et fragilise l'élément mobile 2.

Pour remédier à cela, la présente invention propose une buse laser à élément mobile amélioré, en particulier dont la partie avant 2a formant jupe est apte à et conçu pour se déplacer au-dessus d'obstacles, d'irrégularités ou de dénivelés, et ce lorsque l'élément mobile est dans sa position de travail, c'est-à-dire au contact de la surface supérieure de la tôle à découper.

Plus précisément, la partie avant 2a dudit élément mobile comprend une portion extrême conformée pour passer sur un dénivelé ou un obstacle sans ou avec un choc grandement réduit au niveau de la jupe 6, et sans ou alors très peu de diminution de la vitesse de déplacement de la buse.

Selon l'invention, la partie avant 2a comprend une portion d'extrémité 17 dont le diamètre externe diminue progressivement en direction du deuxième orifice de sortie 12. De la sorte, la partie avant 2a est conformée pour faciliter son passage sur des reliefs ou obstacles présents à la surface de la tôle. Les chocs sont mieux absorbés car la diminution progressive du diamètre externe de la portion d'extrémité 17 favorise la remontée de la jupe 6 vers le logement 5 lorsque la jupe 6 rencontre un dénivelé ou sur un obstacle ponctuel.

Par portion d'extrémité, on entend une portion de la partie avant 2a située à l'extrémité de ladite partie avant, c'est-à-dire en regard de la surface supérieure de la tôle à couper.

Dans un mode de réalisation de l'invention, la portion d'extrémité 17 comprend au moins un chanfrein 18 formant un angle α par rapport à la face avant la du corps de buse 1. L'angle α du au moins chanfrein 18 est compris entre 0,1 et 80°, de préférence entre 10 et 45°.

Dans le cas illustré sur la Figure 4, la portion d'extrémité 17 comprend un chanfrein 18 unique. De préférence, le profil externe de la portion d'extrémité 17 est de forme tronconique.

Avantageusement, la partie avant 2a comprend en outre une portion cylindrique 16 de diamètre externe sensiblement constant, de préférence agencée en amont de la portion d'extrémité 17, c'est-à-dire plus éloignée du deuxième orifice de sortie 12 que la portion d'extrémité 17.

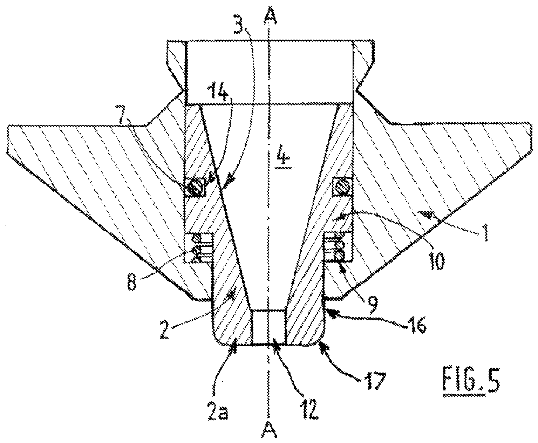

Dans un autre mode de réalisation, illustré sur la Figure 5, le profil externe de la portion d'extrémité 17 comprend au moins une portion de forme curviligne. De préférence, le profil externe de la portion d'extrémité 17 comprend au moins une portion de forme convexe. Le rayon de courbure de la au moins une portion de forme convexe est typiquement compris entre 0,1 et 2 mm.

La présente invention permet ainsi de supprimer ou de limiter grandement la présence d'arêtes vives au niveau de l'extrémité de la partie avant 2a.

La portion cylindrique 16 a un diamètre externe compris de préférence entre 3 et 8 mm, de préférence encore de l'ordre de 6 mm.

Au niveau du deuxième orifice de sortie 12, c'est-à-dire au niveau de la face d'extrémité de la partie avant 2a située en regard de la tôle à couper, la portion d'extrémité 17 a un diamètre externe compris entre 2.5 et 7 mm de préférence de l'ordre de 4 mm.

Il est à noter que la paroi périphérique externe de l'élément mobile 2 comprend une butée 10, de préférence une butée annulaire s'étendant sur tout ou partie de la périphérie dudit élément mobile 2, l'élément élastique 8 étant positionné entre l'épaulement 9 et la butée 10.

Optionnellement, au moins un élément d'étanchéité 7 est agencé entre le corps de buse 1 et l'élément mobile 2, en particulier un ou plusieurs joints toriques 7, ce qui permet d'assurer une étanchéité entre le corps de buse 1 et l'insert mobile 2. De préférence, ledit au moins un élément d'étanchéité 7 est agencé dans une gorge périphérique 14 aménagée dans la paroi périphérique externe de l'élément mobile 2.

Comme on le voit sur les Figures 4 et 5, la buse de l'invention est d'encombrement standard, c'est-à-dire que son encombrement n'est pas augmenté par rapport à une buse de coupe classique, ce qui est avantageux et compatible pour les découpes par imbrication, c'est-à-dire de pièces au sein d'une même tôle avec très peu d'écart entre les différentes pièces.

De plus, la buse de l'invention présente l'autre avantage d'être compatible avec les systèmes de capteur capacitif. En effet, la partie en cuivre ou autre matériau conducteur s'adapte a la hauteur spécifié par le capteur capacitif, comme une buse standard. C'est l'insert mobile 2 qui, sous la pression du gaz, vient en contact avec la tôle 30 à couper et permet ainsi de limiter les fuites de gaz.

L'élément mobile 2 est préférentiellement formé d'un matériau électriquement isolant, composite, céramique technique, polymère, par exemple du polyétheréthercétone (Peek), Vespel ®, céramique ou pyrex, et reprend la géométrie interne d'une buse de coupage laser, c'est-à-dire qu'il peut avoir un profil interne conique, avec canal de sortie cylindrique ou non, tronconique, de type convergent/divergent (i.e. tuyère de Laval) ou toute autre géométrie adaptée.

A noter que par matériau électriquement isolant, on entend un matériau qui ne conduit pas l'électricité, c'est-à-dire qui interdit le passage de courant électrique entre deux éléments conducteurs électrique.

De préférence, l'élément mobile 2 est une pièce de révolution formée d'un seul bloc de matériau.

Dans le cas où l'élément mobile 2 n'est pas formé d'un matériau isolant électrique, au moins une portion de la surface externe de l'élément mobile 2 est recouverte d'une couche de matériau isolant électrique, solidaire ou non de l'élément mobile 2. Cette couche de matériau isolant sert alors d'interface isolante électrique entre l'élément mobile 2 et le corps 1 de buse.

En outre, la buse de l'invention comprend un élément mobile 2 dont le diamètre d'orifice de sortie 12 est compris entre 0.5 et 5 mm.

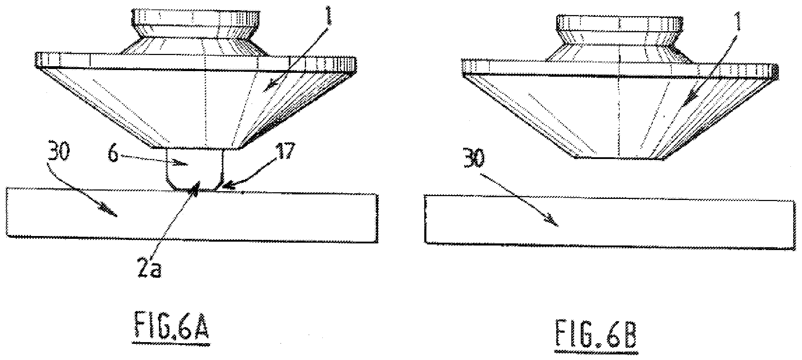

En fait, l'élément mobile 2 de la buse selon l'invention est donc apte à se déplacer entre plusieurs positions comprenant au moins:
- une position de repos dans laquelle la jupe 6 de la partie avant 2a est totalement ou quasi-totalement rentrée dans le logement axial 5 du corps de buse 1, comme illustré en Figure 6B, et
- une position de travail dans laquelle la jupe 6 de la partie avant 2a fait totalement ou quasi-totalement saillie à l'extérieur du logement axial 5 du corps de buse 1, au travers du premier orifice de sortie 11, et vient au contact de la pièce à couper, comme illustré en Figure 6A.

Bien entendu, l'élément mobile 2 peut occuper des positions intermédiaires dans lesquelles la jupe 6 ne fait que partiellement saillie à l'extérieur du logement axial 5 du corps de buse 1. Ces positions intermédiaires peuvent être notamment fonction de la pression exercée par le gaz sur l'élément mobile 2.

En fait, la combinaison du profil externe spécifique de l'extrémité de la partie avant 2a et de l'agencement de l'élément élastique 8 apporte une amélioration encore plus considérable au fonctionnement de la buse de l'invention.

D'une part, la forme de la portion extrême permet le passage de la jupe 6 sur un dénivelé ou sur un obstacle ponctuel en favorisant la remontée de la jupe vers le logement 5 et évite les choc frontaux avec des obstacles sur la tôle.

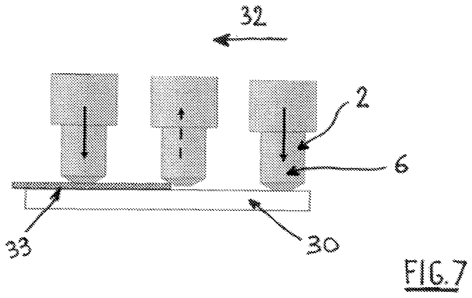

Ceci est illustré sur la Figure 7, où l'élément mobile 2 est schématisé avec sa jupe 6, sans corps 1 pour plus de clarté, se déplaçant sur une tôle à découper 30 dans une direction de découpe 32. Sans obstacle, la jupe 6 se déplace au contact de la tôle grâce à la pression exercée par le gaz de coupe sur l'élément mobile 2, représentée par la flèche en trait continu (_). Comme on le voit, lorsqu'un obstacle ou un dénivelé est rencontré, ici un dénivelé ou une marche simulée par une pièce 33 posée sur la tôle 30, une remontée de la jupe 6, représentée par la flèche en pointillés (- - -) est favorisé par le chanfrein agencé au niveau de la portion d'extrémité 17. Une fois au-dessus de l'obstacle 33, la jupe 6 se rapproche de la surface de l'obstacle 33 et poursuit son action de guidage du gaz de coupe dans la saignée.

De plus, l'élément élastique 8 permet de limiter la pression exercée par l'élément mobile 2 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 2 au contact de la pièce à couper tout en limitant la pression que ledit élément exerce sur la tôle, pour minimiser grandement, voire éliminer, tout risque de déformation de la tôle dans laquelle la pièce est découpée, de rayures de la surface de la tôle, et d'entraînement de la tôle.

De cette manière, la présente invention procure une plus grande souplesse de mouvement à la jupe 6 et lui permet de suivre les variations de niveaux qui peuvent se présenter sur la surface de la tôle à couper, ce qui améliore sa mise en oeuvre au plan industriel.

On limite ainsi les risques d'arrêt de la machine en cas d'entrave au déplacement de la tête et de collisions brutales de la jupe avec des obstacles.

La solution de la présente invention conduit ainsi à une buse à élément mobile avec une robustesse, une durée de vie et une mise en oeuvre améliorées par rapport à une buse selon le document FR n°1154224.

### Exemples

Afin de montrer l'efficacité de la buse selon l'invention par rapport à une buse standard, c'est-à-dire une buse classique sans élément mobile, et donc l'intérêt de forcer le gaz dans la saignée de coupe grâce à la mise en oeuvre d'une jupe montée sur un élément mobile, on réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm de diamètre ou d'une buse selon la Figure 3 avec jupe mobile cylindrique et passage axial de profil conique avec canal de sortie cylindrique de 1,8 mm de diamètre. En outre, le profil externe de la jupe mobile comprend un chanfrein d'un angle α d'environ 30° par rapport à l'horizontale, i. e. par rapport à la face avant du corps de buse.

Le gaz d'assistance utilisé est de l'azote.

La tôle à couper est en acier inoxydable 304 L de 5 mm d'épaisseur.

De plus, un dénivelé d'une hauteur de 0.8 mm est simulé sur une zone de la tôle à couper en recouvrant une portion de la tôle à couper par un autre morceau de tôle de 0.8 mm d'épaisseur, comme schématisé sur la Figure 7.

Le faisceau laser à une puissance de 4 kW et la vitesse de coupe est de 2,6 m/min

Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu. En outre, la buse franchit aisément et sans à-coup le dénivelé de 0.8 mm simulé sur la tôle, et ce sans diminution excessive de la vitesse de coupe lors du passage sur le dénivelé. A noter que 0.8 mm est typiquement ma hauteur maximum des dénivelés ou obstacles pouvant se trouver sur une tôle découpée par faisceau laser.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses.

## Revendications

1. Buse laser (1, 2) comprenant :
- un corps (1) de buse comprenant un logement axial (5) et un premier orifice de sortie (11) situé au niveau de la face avant (1a) du corps de buse (1), et
- un élément mobile (2) agencé dans le logement axial (5) du corps de buse (1), comprenant une partie avant (2a) formant jupe et comprenant un deuxième orifice de sortie (12), ledit élément mobile (2) étant apte à se déplacer en translation dans le logement axial (5) en direction du premier orifice de sortie (11) sous l'effet d'une pression gazeuse s'exerçant sur l'élément mobile (2) jusqu'à ce que la partie avant (2a) formant jupe de l'élément mobile (2) vienne faire saillie à l'extérieur du logement axial (5) au travers du premier orifice de sortie (11),
**caractérisée en ce que**
- un élément élastique (8) est agencé dans le logement axial (5), entre le corps de buse (1) et l'élément mobile (2), l'élément élastique (8) exerçant une force de rappel élastique sur l'élément mobile (2), tendant à s'opposer au mouvement de translation de l'élément mobile (2) dans le premier logement axial (5) en direction du premier orifice de sortie (11), et
- la partie avant (2a) comprend une portion d'extrémité (17) dont le diamètre externe diminue progressivement en direction du deuxième orifice de sortie (12).

2. Buse selon la revendication précédente, **caractérisée en ce que** la partie avant (2a) comprend en outre une portion cylindrique (16) de diamètre externe sensiblement constant.

3. Buse selon l'une des revendications 1 ou 2, **caractérisée en ce que** la portion d'extrémité (17) comprend au moins un chanfrein (18) formant un angle (α) par rapport à la face avant (1a) du corps de buse (1).

4. Buse selon la revendication 3, **caractérisée en ce que** l'angle (a) du chanfrein (18) est compris entre 0,1 et 80°, de préférence entre 10 et 45°.

5. Buse selon l'une des revendications précédentes, **caractérisée en ce que** le profil externe de la portion d'extrémité (17) est de forme tronconique.

6. Buse selon l'une des revendications précédentes, **caractérisée en ce que** le profil externe de la portion d'extrémité (17) comprend au moins une portion de forme curviligne.

7. Buse selon l'une des revendications précédentes, **caractérisée en ce que** le profil externe de la portion d'extrémité (17) comprend au moins une portion de forme convexe.

8. Buse selon la revendication 7, **caractérisée en ce que** la au moins une portion de forme convexe a un rayon de courbure compris entre 0,1 et 2 mm.

9. Buse selon l'une des revendications précédentes, **caractérisée en ce que** la portion cylindrique (16) a un diamètre externe compris entre 3 et 8 mm.

10. Buse selon l'une des revendications précédentes, **caractérisée en ce que** la portion d'extrémité (17) a un diamètre externe compris entre 2.5 et 7 mm au niveau du deuxième orifice de sortie (12).

11. Tête de focalisation laser comprenant au moins une optique de focalisation, **caractérisée en ce qu'**elle comporte en outre une buse laser selon l'une des revendications précédentes.

12. Installation laser comprenant un générateur laser, une tête de focalisation laser et un dispositif de convoyage de faisceau laser relié audit générateur laser et à ladite tête de focalisation laser, **caractérisée en ce que** la tête de focalisation laser est selon la revendication 11.

13. Installation selon la revendication 12, **caractérisée en ce que** le générateur laser est de type CO₂, YAG, à fibres ou à disques.

14. Procédé de coupage par faisceau laser, dans lequel on met en oeuvre une buse selon l'une des revendications 1 à 10, une tête de focalisation laser selon la revendication 11 ou une installation selon l'une des revendications 12 ou 13.

## Patentansprüche

1. Laserdüse (1, 2), umfassend:
- einen Düsenkörper (1), der eine axiale Aufnahme (5) und eine erste Austrittsöffnung (11) umfasst, die sich auf Höhe der Vorderseite (1a) des Düsenkörpers (1) befindet, und
- ein bewegliches Element (2), das in der axialen Aufnahme (5) des Düsenkörpers (1) angeordnet ist, umfassend einen Vorderteil (2a), der eine Schürze bildet und eine zweite Austrittsöffnung (12) umfasst, wobei das bewegliche Element (2) in der Lage ist, sich in der axialen Aufnahme (5) in Richtung der ersten Austrittsöffnung (11) unter Einwirkung eines Gasdrucks, der auf das bewegliche Element (2) ausgeübt wird, verschiebend zu bewegen, bis der Vorderteil (2a) des beweglichen Elements (2), der eine Schürze bildet, von der axialen Aufnahme (5) durch die erste Austrittsöffnung (11) nach außen vorragt,
**dadurch gekennzeichnet, dass**
- ein elastisches Element (8) in der axialen Aufnahme (5) zwischen dem Düsenkörper (1) und dem beweglichen Element (2) angeordnet ist, wobei das elastische Element (8) eine Rückstellkraft auf das bewegliche Element (2) ausübt, wobei es dazu neigt, sich der verschiebenden Bewegung des beweglichen Elements (2) in der ersten axialen Aufnahme (5) in Richtung der ersten Austrittsöffnung (11) entgegenzusetzen, und
- der Vorderteil (2a) einen Endabschnitt (17) umfasst, dessen Außendurchmesser in Richtung der zweiten Austrittsöffnung (12) allmählich abnimmt.

2. Düse nach dem vorstehenden Anspruch, **dadurch gekennzeichnet, dass** der Vorderteil (2a) weiterhin einen zylindrischen Abschnitt (16) mit einem im Wesentlichen konstanten Außendurchmesser umfasst.

3. Düse nach einem der Ansprüche 1 oder 2, **dadurch gekennzeichnet, dass** der Endabschnitt (17) mindestens eine Abschrägung (18) umfasst, die einen Winkel (α) in Bezug auf die Vorderseite (1a) des Düsenkörpers (1) bildet.

4. Düse nach Anspruch 3, **dadurch gekennzeichnet, dass** der Winkel (α) der Abschrägung (18) zwischen 0,1 und 80° beträgt, vorzugsweise zwischen 10 und 45°.

5. Düse nach einem der vorstehenden Ansprüche, **dadurch gekennzeichnet, dass** das Außenprofil des Endabschnitts (17) kegelstumpfförmig ist.

6. Düse nach einem der vorstehenden Ansprüche, **dadurch gekennzeichnet, dass** das Außenprofil des Endabschnitts (17) mindestens einen Abschnitt mit krummliniger Form umfasst.

7. Düse nach einem der vorstehenden Ansprüche, **dadurch gekennzeichnet, dass** das Außenprofil des Endabschnitts (17) mindestens einen Abschnitt mit konvexer Form umfasst.

8. Düse nach Anspruch 7, **dadurch gekennzeichnet, dass** der mindestens eine Abschnitt mit konvexer Form einen Krümmungsradius aufweist, der zwischen 0,1 und 2 mm beträgt.

9. Düse nach einem der vorstehenden Ansprüche, **dadurch gekennzeichnet, dass** der zylindrische Abschnitt (16) einen Außendurchmesser aufweist, der zwischen 3 und 8 mm beträgt.

10. Düse nach einem der vorstehenden Ansprüche, **dadurch gekennzeichnet, dass** der Endabschnitt (17) einen Außendurchmesser aufweist, der zwischen 2,5 und 7 mm auf Höhe der zweiten Austrittsöffnung (12) beträgt.

11. Laserfokussierkopf, umfassend mindestens eine Fokussieroptik, **dadurch gekennzeichnet, dass** er weiterhin eine Laserdüse nach einem der vorstehenden Ansprüche umfasst.

12. Laseranlage, umfassend einen Lasergenerator, einen Laserfokussierkopf und eine Laserstrahl-Transportvorrichtung, die mit dem Lasergenerator und dem Laserfokussierkopf verbunden ist, **dadurch gekennzeichnet, dass** der Laserfokussierkopf dem Anspruch 11 entspricht.

13. Anlage nach Anspruch 12, **dadurch gekennzeichnet, dass** der Lasergenerator vom Typ CO₂, YAG, Faserlaser oder Scheibenlaser ist.

14. Verfahren zum Schneiden mittels Laserstrahl, wobei eine Düse nach einem der Ansprüche 1 bis 10, ein Laserfokussierkopf nach Anspruch 11 oder eine Anlage nach einem der Ansprüche 12 oder 13 verwendet wird.

## Claims

1. Laser nozzle (1, 2) comprising:
- a nozzle body (1) comprising an axial housing (5) and a first outlet orifice (11) situated in the region of the front face (1a) of the nozzle (1) body, and
- a mobile element (2) arranged in the axial housing (5) of the nozzle (1) body, comprising a front part (2a) forming a skirt and comprising a second outlet orifice (12), said mobile element (2) being able to be moved in a translational movement inside the axial housing (5) toward the first outlet orifice (11) under the effect of a gas pressure exerted on the mobile element (2) until the front part (2a) forming a skirt of the mobile element (2) projects out from the axial housing (5) through the first outlet orifice (11),
**characterised in that**
- an elastic element (8) is arranged in the axial housing (5), between the nozzle (1) body and the mobile element (2), the elastic element (8) exerting an elastic return force on the mobile element (2), which tends to oppose the translational movement of the mobile element (2) inside the first axial housing (5) toward the first outlet orifice (11), and
- the front part (2a) comprises an end portion (17) of which the outer diameter decreases progressively toward the second outlet orifice (12).

2. Nozzle as claimed in the preceding claim, **characterised in that** the front part (2a) further comprises a cylindrical portion (16) with a substantially constant outer diameter.

3. Nozzle according to one of claims 1 or 2, **characterised in that** the end portion (17) comprises at least one chamfer (18) forming an angle (α) with respect to the front face (1a) of the nozzle (1) body.

4. Nozzle according to claim 3, **characterised in that** the angle (α) of the chamfer (18) is between 0.1 and 80°, preferably between 10 and 45°.

5. Nozzle according to one of the preceding claims, **characterised in that** the outer profile of the end portion (17) is of tapered shape.

6. Nozzle according to one of the preceding claims, **characterised in that** the outer profile of the end portion (17) comprises at least one portion with a curved shape.

7. Nozzle according to one of the preceding claims, **characterised in that** the outer profile of the end portion (17) comprises at least one portion with a convex shape.

8. Nozzle according to claim 7, **characterised in that** the at least one portion with a convex shape has a radius of curvature between 0.1 and 2 mm.

9. Nozzle according to one of the preceding claims, **characterised in that** the cylindrical portion (16) has an outer diameter between 3 and 8 mm.

10. Nozzle according to one of the preceding claims, **characterised in that** the end portion (17) has an outer diameter between 2.5 and 7 mm in the region of the second outlet orifice (12).

11. Laser focusing head comprising at least one focusing optic, **characterised in that** it further comprises a laser nozzle according to one of the preceding claims.

12. Laser installation comprising a laser generator, a laser focusing head and a laser beam conveying device connected to said laser generator and to said laser focusing head, **characterised in that** the laser focusing head is according to claim 11.

13. Installation according to claim 12, **characterised in that** the laser generator is of the CO₂, YAG, fibre or disc type.

14. Laser beam cutting method, wherein on a nozzle is implemented according to one of claims 1 to 10, a laser focusing head according to claim 11 or an installation according to one of claims 12 or 13.
